# EUROPEAN PATENT SPECIFICATION

(11) **EP 2 199 594 B1**
(45) Date of publication and mention of the grant of the patent: **24.07.2013**
(21) Application number: 08425801.1
(22) Date of filing: 18.12.2008
(51) Int. Cl.: F02N 11/08, F02N 11/10

(54) **Engine starting device for the stop and start function in a vehicle and method for the use of the device**
Motoranlasservorrichtung für Kraftfahrzeug mit einer Start/Stop-Funktion und Verfahren zur Verwendung der Vorrichtung
Dispositif de démarrage pour moteur à combustion dans un véhicule avec une fonction d'arrêt et démarrage et méthode d'utilisation de ce dispositif

(43) Date of publication of application: 23.06.2010
(73) Proprietor: Iveco S.p.A., 10156 Torino (IT)
(72) Inventor: Abbatantuoni, Vincenzo, 10134 Torino (IT); Vaglio, Paolo, 10128 Torino (IT)
(74) Representative: Borsano, Corrado

(56) References cited:
- EP-A- 1 882 849
- GB-A- 1 434 972
- JP-A- 2000 145 491
- US-A1- 2007 267 231

## Description

### Application field of the invention

The present invention refers to an engine starting device for the Stop and Start function in a vehicle, and method for the use of the device.

### Description of the prior art

The Stop & Start function in a vehicle allows to stop and to immediately restart the engine when the vehicle is stationary but is about to be restarted, and is useful in a number of situations when there are numerous temporary stops of the vehicle, for example because of the traffic lights, during the delivery of goods, in the traffic jams etc., when it is useless to keep the engine started.

The usefulness of said energy saving function is evident since it allows to save fuel, but it also allows to reduce pollution, especially in urban areas.

However, some problems arise concerning the proper management of said function. The Stop & Start function has to be realized by means of a device which is able to assure a high reliability, but that, on the other hand, is not expensive and has an easy maintenance.

Document EP 1 882 849 A1 shows an engine starting device with two relays in series for controlling a Stop and Start function.

### Summary of the invention

Therefore the aim of the present invention is to provide an engine starting device for the stop and start function in a vehicle, and to provide a method for the realization of the device, which solves the problems mentioned above.

The present invention relates to an engine starting device, especially for the stop and start function in a vehicle, comprising:
- a first relay with the main line connected to an ignition switch;
- a second relay with the main line connected to the main line of said first relay and to an ignition circuit of an engine starter, said main lines of said first and second relay determining, when closed, the activation of the starter for starting the engine;
- an electronic control unit (BCM) comprising means for controlling said first and second relay (DR1, DR2), so that, when there are conditions for starting the engine by means of the stop and start function, they determine the closing of said main lines of said first and second relay, by closing both relays with a first delay from each other (RL1 CLOSED RL2 CLOSED) ; said means for controlling said first and second relay (DR1, DR2) being configured to alternately exchange said delay between said relays for successive startings, thus the problems of overvoltage when closing are distributed at best between the two relays, so that the two relays are used with the same percentage of failure risk and reliability.

The present invention relates in particular to an engine starting device for the stop and start function in a vehicle, and a method for the use of the device, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:
figure 1 shows a block diagram of the device according to the present invention;
figure 2 shows a flowchart which illustrates the method for the realization of the device.

In the drawings the same reference numbers and letters are used to identify the same elements or components.

### Detailed description of preferred embodiments of the invention

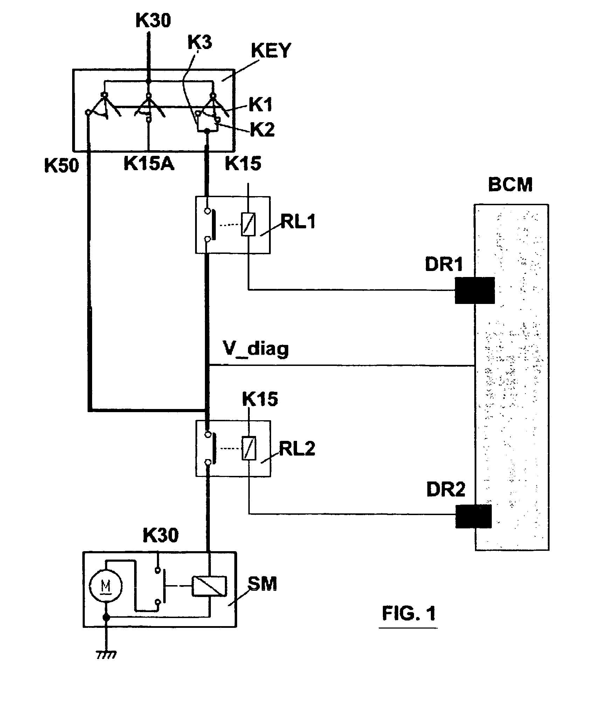

With reference to figure 1, an electronic control unit BCM is used to control all the stop & start logic functions (from now on indicated with the acronym S&S).

A main switch KEY is present and comprises the ignition key with three ways or branches, indicated by K15, K15A, K50, and with three main positions of the ignition key connected with each other: stable position of stopped engine K1, stable position of started engine K2, instable position of engine starting K3: in this latter position the first starting is realized from the stopped engine, then the switch goes back into the stable position of engine started K2.

The way K15 activates the function S&S, by connecting to the vehicle battery, using the connection K30, in the two positions K2 and K3.

The way K50 is the usual way of engine starting, wherein K50 is connected to the battery, by means of the connection K30, only in the instable position K3, while when it goes back in the stable position K2 it is no longer connected.

The way K15A allows the connection of loads to the battery not shown in the figures) which must not sense the starting: it opens during the starting step, position K3, while it remains closed on the load in position K2 toward the battery by means of the connection K30.

There are two relays RL1, RL2, in series, both controlled by the control unit BCM. These two relays are normally open, and have a controlling circuit that, when driven, determines the opening or the closing of the main line by means of the control line which connects the controlling coil between the positive of the battery (line K30-K15) and the ground. The main line RL1 is connected on one side to the way K15 and on the other side to an end of the main line of the relay RL2, to which the way K50 is also connected. The other end of the main line of the relay RL2 is connected to the coil of the starter SM.

The starter SM, of a type known, comprises a relay that, controlled by the starting circuit, connects to the battery K30 and, when it is driven to start the engine, it determines the engaging of the starter's pinion on the flywheel of the engine, in a way per se known in the art.

The starting by the ignition key takes place by means of the branch K50, while the starting by the S&S function takes place by means of the branch K15.

The two relays RL1 and RL2 are both closed when the starting takes place by means of the S&S function, while when the starting takes place by means of ignition key, the relay RL2 closes, while the relay RL1 remains open.

The use of two relays is for safety reasons, in order to minimize the risk of an unwanted engine starting, that would take place by means of the closing of the line in unwanted situations. If both the relays are maintained open, the probability of an unwanted starting decreases.

By means of a V_diag connection, the BCM control unit continuously detects the voltage in the intermediate point between the two relays for diagnostic purposes, so that it can become aware if one of the two relays has been closed in an incorrect way, and therefore it can determine the disabling of the S&S function, by means of a procedure described below.

The two relays are managed by two different drivers, DR1, DR2, that are part of the control unit BCM which controls them, in an independent way as to minimize the risk of a failure of both relays at the same time.

The controlling of the two drivers by the BCM's microcontroller takes places by means of two distinct electronic devices, thus determining the main condition of the physical and electric decoupling of the two drivers themselves. Moreover a decoupling at the software level takes place in the BCM, by managing the two drivers DR1, DR2 by means of two distinct software tasks.

It would also be possible to use two separate control units, but on the contrary an architecture with a single control unit is used, and the two relays are controlled with two distinct drivers in order to decouple the two commands: this way the system has the same reliability but its costs are reduced.

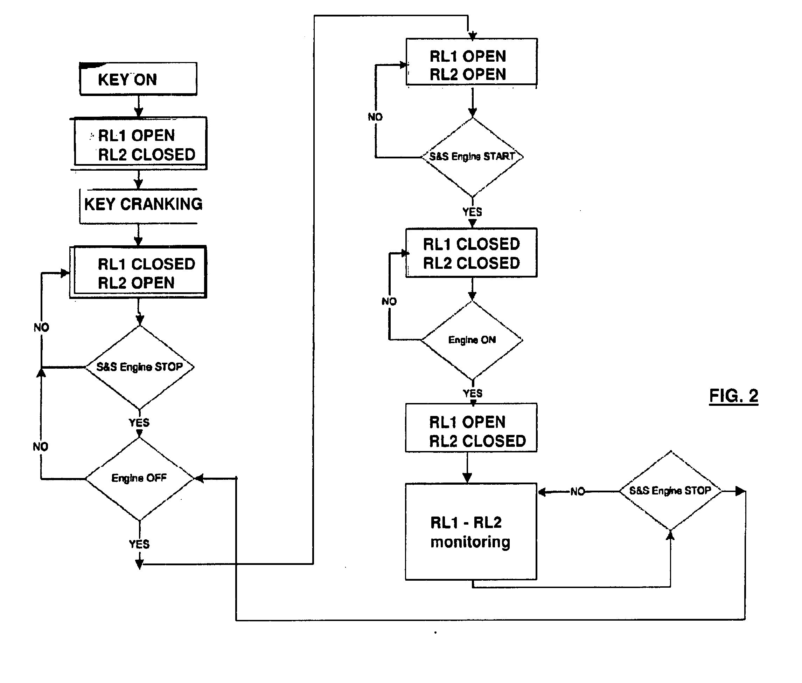

The logic with which the BCM control unit controls the relays is described below, with reference to figure 2, wherein the acronyms identifying the functions carried out are indicated in the different blocks.

The first step is KEY ON and concerns a first engine start by means of the ignition key. The RL1 relay is opened and the RL2 relay is closed (RL1 OPEN RL2 CLOSED). Then the starting circuit is closed by means of the branch K50 (KEY CRANKING), and the first normal starting of the engine is obtained.

After the first starting, the two relays exchange their state: first the RL2 relay opens and then the RL1 relay closes (RL1 CLOSED RL2 OPEN). Then, when the conditions for the activation of the S&S function take place (S&S Engine STOP), the engine is stopped (Engine OFF): in this step BCM sends a stopping request to the engine control unit.

Therefore the relay RL1, that was closed, opens and the two relays are both open (RL1 OPEN RL2 OPEN).

When the conditions for the following engine restarting take place (S&S Engine START), both relays are closed with a certain delay from each the other (RL1 CLOSED RL2 CLOSED) and the engine is restarted (Engine ON). As the engine starts, the relay RL1 opens (RL1 OPEN RL2 CLOSED).

BCM keeps constantly in memory the condition of the relays (open or closed), in order to alternately exchange the delay between each other for successive startings. Thus the problems of overvoltage when closing are distributed at best between the two relays, so that the two relays are used with the same percentage of failure risk and reliability.

A monitoring function of the relay condition is used in order to avoid the phenomenon called sticking, namely the blocking in an open or closed position. BCM controls the voltage at the connection V_diag, in order to verify that the two relays function coherently with the control actuated by BCM itself. If a problem of sticking takes place on one of the two relays, BCM immediately detects it and disables the S&S function.

An additional monitoring procedure is actuated only when the engine is started for a long time (1200 s) without any command to the relays. After a certain time from the starting of the engine, when one of the relays is closed and the other is open, the procedure intervenes opening a relay and closing the other; the two operations are carried out with a certain delay from each other, in order to avoid dangerous overlapping of state transition between the two relays.

This kind of control of the functionality of the two relays, which uses a control of the BCM control unit, allows to avoid to use relays with internal diagnosis circuitry, thus realizing a saving on the cost of the relays. The relays may be of a normal type available on the market.

The device and the relative functionality described above may have a more general use with respect to the realization of the Stop and Start function, namely they may be used more in general as a function of automatic restarting of the engine, that is not by ignition key, any time one wants to stop the engine because it is not useful, or in case the engine is stopped by itself for some reason and it is necessary to restart it automatically.

The BCM control unit comprises a software for the realization of the method that is object of the invention, that may be realized by using design techniques known to the person skilled in the art.

The method described above may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Engine starting device, especially for the stop and start function in a vehicle, comprising:
- a first relay (RL1) with the main line connected to an ignition switch (KEY);
- a second relay (RL2) with the main line connected to the main line of said first relay and to an ignition circuit of a engine starter (SM), said main lines of said first and second relay determining, when closed, the activation of the starter for the engine starting;
- an electronic control unit (BCM) comprising means for controlling said first and second relay (DR1, DR2), so that, when there are conditions for starting the engine by means of the stop and start function, they determine the closing of said main lines of said first and second relay, by closing both relays with a first delay from each other (RL1 CLOSED RL2 CLOSED) **characterised by**; said means for controlling said first and second relay (DR1, DR2) being configured to alternately exchange said delay between said relays for successive startings, thus the problems of overvoltage when closing are distributed at best between the two relays, so that the two relays are used with the same percentage of failure risk and reliability.

2. Engine starting device as in claim 1, wherein said electronic control unit (BCM) comprises also diagnosis means (V_diag) which verify the voltage between said main lines of said first and second relay, and wherein said controlling means (DR1, DR2) of said first and second relay (RL1, RL2), determine the alternate opening and closing of said main lines of said first and second relay, in order to allow said verification.

3. Engine starting device as in claim 2, wherein said controlling means (DR1, DR2) determine the alternate closing of the main lines of the first and the second relay, so that there is a second delay between a closing and an opening, and after a certain time from the engine starting.

4. Engine starting device as in claim 1, wherein said controlling means (DR1, DR2) comprise a first (DR1) and a second (DR2) driver in said electronic control unit (BCM) controlled by means of different electronic devices.

5. Method of controlling an engine starting device, especially for the stop and start function in a vehicle, said device comprising:
- a first relay (RL1) with the main line connected to an ignition switch (KEY);
- a second relay (RL2) with the main line connected to the main line of said first relay and to an ignition circuit of a engine starter (SM), said main lines of said first and second relay determining, when closed, the activation of the starter for the engine starting;
- an electronic control unit (BCM) for controlling said first and second relay (DR1, DR2);
said method comprising a step of controlling said first and second relay, through said control unit, by closing both relays with a first delay from each other (RL1 CLOSED RL2 CLOSED) and **characterised by** the step of alternately exchange said delay between said relays for successive startings, thus the problems of overvoltage when closing are distributed at best between the two relays, so that the two relays are used with the same percentage of failure risk and reliability.

6. Method as in claim 5, comprising the step of verification of the voltage between said main lines of said first and second relay determining the alternate closing and opening of said main lines of said first and second relay.

7. Method as in claim 6, wherein said step of verification is carried out so that there is a second delay between an alternate closing and opening of said main lines of said first and second relay, and after a certain time from the engine starting.

8. Computer program comprising program code means for performing the steps of any claim from 1 to 7, when such program is run on a computer.

9. Computer-readable means comprising a recorded program, said computer-readable means comprising program code means for performing the steps according to the claims from 5 to 7, when said program is run on a computer.

## Patentansprüche

1. Motorstartvorrichtung, insbesondere für die Stopp- und Startfunktion in einem Fahrzeug, umfassend:
- ein erstes Relais (RL1), das über die Hauptleitung mit einen Zündungsschalter (KEY) verbunden ist;
- ein zweites Relais (RL2), das über die Hauptleitung mit der Hauptleitung des ersten Relais und mit einem Zündkreislauf eines Motorenanlassers (SM) verbunden ist, wobei die Hauptleitungen des ersten und des zweiten Relais die Aktivierung des Anlassers zum Starten des Motors bestimmen, wenn sie geschlossen sind;
- eine elektronische Kontrolleinheit (BCM), umfassend Einrichtungen zur Kontrolle des ersten und des zweiten Relais (DR1, DR2), so, dass, wenn Bedingungen zum Starten des Motors mittels der Stopp- und Startfunktion vorliegen, diese das Schließen der Hauptleitungen des ersten und des zweiten Relais bestimmen, indem beide Relais mit einer ersten Verzögerung zueinander geschlossen werden (RL1 CLOSED RL2 CLOSED), **dadurch gekennzeichnet, dass** diese Einrichtungen zur Kontrolle des ersten und des zweiten Relais (DR1, DR2) konfiguriert sind, diese Verzögerung zwischen den Relais für aufeinanderfolgende Starts alternierend zu wechseln, und daher die Probleme einer Überspannung beim Schließen bestmöglich zwischen den beiden Relais verteilt werden, so dass die beiden Relais mit demselben Anteil an Ausfallrisiko und Zuverlässigkeit benutzt werden.

2. Motorstartvorrichtung nach Anspruch 1, wobei die elektronische Kontrolleinheit (BCM) auch Diagnosemittel (V_diag) umfasst, die die Spannung zwischen den Hauptleitungen des ersten und des zweiten Relais prüfen und wobei die Einrichtungen zur Kontrolle (DR1, DR2) des ersten und des zweiten Relais (RL1, RL2) das alternierende Öffnen und Schließen der Hauptleitungen des ersten und des zweiten Relais bestimmen, um die Überprüfung zu ermöglichen.

3. Motorstartvorrichtung nach Anspruch 2, wobei die Einrichtungen zur Kontrolle (DR1, DR2) das alternierende Schließen der Hauptleitungen des ersten und des zweiten Relais bestimmen, so dass eine zweite Verzögerung zwischen einem Schließen und einem Öffnen und nach einer bestimmten Zeit ab dem Motorstart auftritt.

4. Motorstartvorrichtung nach Anspruch 1, wobei die Einrichtungen zur Kontrolle (DR1, DR2) einen ersten (DR1) und einen zweiten (DR2) Treiber in der elektronischen Kontrolleinheit (BCM) umfassen, der mittels verschiedener elektronischer Vorrichtungen kontrolliert wird.

5. Verfahren zum Kontrollieren der Motorstartvorrichtung, insbesondere für eine Stopp- und Startfunktion in einem Fahrzeug, wobei die Vorrichtung umfasst:
- ein erstes Relais (RL1), das über die Hauptleitung mit einen Zündungsschalter (KEY) verbunden ist;
- ein zweites Relais (RL2), das über die Hauptleitung mit der Hauptleitung des ersten Relais und mit einem Zündkreislauf eines Motorenanlassers (SM) verbunden ist, wobei die Hauptleitungen des ersten und des zweiten Relais die Aktivierung des Anlassers zum Starten des Motors bestimmen, wenn sie geschlossen sind;
- eine elektronische Kontrolleinheit (BCM) zur Kontrolle des ersten und des zweiten Relais (DR1, DR2), ,
wobei das Verfahren einen Schritt zur Kontrolle des ersten und des zweiten Relais durch die Kontrolleinheit umfasst, indem beide Relais mit einer ersten Verzögerung zueinander geschlossen werden (RL1 CLOSED RL2 CLOSED) und das charakterisiert ist durch den Schritt des alternierenden Wechsels dieser Verzögerung zwischen den Relais für aufeinanderfolgende Starts, und daher die Probleme einer Überspannung beim Schließen bestmöglich zwischen den zwei Relais verteilt werden, so dass die beiden Relais mit demselben Anteil an Ausfallrisiko und Zuverlässigkeit benutzt werden.

6. Verfahren nach Anspruch 5, umfassend den Schritt der Überprüfung der Spannung zwischen den Hauptleitungen des ersten und des zweiten Relais, die das alternierende Schließen und Öffnen der Hauptleitungen des ersten und des zweiten Relais bestimmen.

7. Verfahren nach Anspruch 6, wobei der Schritt zur Überprüfung derart durchgeführt wird, dass eine zweite Verzögerung zwischen einem alternierenden Schließen und Öffnen der Hauptleitungen des ersten und des zweiten Relais und nach einer bestimmten Zeit ab dem Motorstart auftritt.

8. Computerprogramm umfassend Programmcodemittel zum Durchführen von Schritten irgendeines der Ansprüche von 1 bis 7, wenn ein solches Programm auf einem Computer ausgeführt wird.

9. Computerlesbare Mittel umfassend ein aufgezeichnetes Programm, wobei diese computerlesbaren Mittel Programmcodemittel zum Durchführen der Schritte gemäß den Ansprüchen 5 bis 7 umfassen, wenn das Programm auf einem Computer ausgeführt wird.

## Revendications

1. Démarreur de moteur à combustion interne, en particulier pour une fonction d'arrêt et de démarrage dans un véhicule, comprenant :
- un premier relais (RL1) avec la ligne principale connectée à un commutateur d'allumage (KEY) ;
- un deuxième relais (RL2) avec la ligne principale connectée à la ligne principale dudit premier relais et à un circuit d'allumage d'un démarreur de moteur (SM), lesdites lignes principales desdits premier et deuxième relais déterminant, lorsqu'ils sont fermés, l'activation du démarreur pour le démarrage du moteur ;
- une unité de commande électronique (BCM) comprenant des moyens pour commander lesdits premier et deuxième relais (DR1, DR2), de sorte que, lorsqu'il existe des conditions pour démarrer le moteur à combustion interne au moyen de la fonction d'arrêt et de démarrage, ils déterminent la fermeture desdites lignes principales desdits premier et deuxième relais, en fermant les deux relais avec un premier retard l'un par rapport à l'autre (RL1 CLOSED RL2 CLOSED), **caractérisé en ce que** lesdits moyens pour commander lesdits premier et deuxième relais (DR1, DR2) sont configurés pour échanger alternativement ledit retard entre lesdits relais pour des démarrages successifs, ainsi les problèmes de surtension lors de la fermeture sont répartis au mieux entre les deux relais, de sorte que les deux relais sont utilisés avec le même pourcentage de risque de défaillance et de fiabilité.

2. Démarreur de moteur à combustion interne selon la revendication 1, dans lequel ladite unité de commande électronique (BCM) comprend également des moyens de diagnostic (V_diag) qui vérifient la tension entre lesdites lignes principales desdits premier et deuxième relais, et dans lequel lesdits moyens de commande (DR1, DR2) desdits premier et deuxième relais (RL1, RL2) déterminent l'ouverture et la fermeture alternées desdites lignes principales desdits premier et deuxième relais, afin de permettre ladite vérification.

3. Démarreur de moteur à combustion interne selon la revendication 2, dans lequel lesdits moyens de commande (DR1, DR2) déterminent la fermeture alternée des lignes principales des premier et deuxième relais, de sorte qu'il existe un deuxième retard entre une fermeture et une ouverture, et après un certain temps à partir du démarrage du moteur.

4. Démarreur de moteur à combustion interne selon la revendication 1, dans lequel lesdits moyens de commande (DR1, DR2) comprennent un premier (DR1) et un deuxième (DR2) dispositif de commande dans ladite unité de commande électronique (BCM) commandés au moyen de différents dispositifs électroniques.

5. Procédé pour commander un démarreur de moteur à combustion interne, en particulier pour la fonction d'arrêt et de démarrage dans un véhicule, ledit dispositif comprenant :
- un premier relais (RL1) avec la ligne principale connectée à un commutateur d'allumage (KEY) ;
- un deuxième relais (RL2) avec la ligne principale connectée à la ligne principale dudit premier relais et à un circuit d'allumage d'un démarreur de moteur (SM), lesdites lignes principales desdits premier et deuxième relais déterminant, lorsqu'ils sont fermés, l'activation du démarreur pour le démarrage du moteur ;
- une unité de commande électronique (BCM) pour commander lesdits premier et deuxième relais (DR1, DR2) ;
ledit procédé comprenant une étape pour commander lesdits premier et deuxième relais, par l'intermédiaire de ladite unité de commande, en fermant les deux relais avec un premier retard l'un par rapport à l'autre (RL1 CLOSED RL2 CLOSED), et **caractérisé par** l'étape d'échange alterné dudit retard entre lesdits relais pour des démarrages successifs, ainsi les problèmes de surtension lors de la fermeture sont répartis au mieux entre les deux relais, de sorte que les deux relais sont utilisés avec le même pourcentage de risque de défaillance et de fiabilité.

6. Procédé selon la revendication 5, comprenant l'étape de vérification de la tension entre lesdites lignes principales desdits premier et deuxième relais déterminant la fermeture et l'ouverture alternées desdites lignes principales desdits premier et deuxième relais.

7. Procédé selon la revendication 6, dans lequel ladite étape de vérification est effectuée de sorte qu'il existe un deuxième retard entre une fermeture et une ouverture alternées desdites lignes principales desdits premier et deuxième relais, et après un certain temps à partir du démarrage du moteur.

8. Programme d'ordinateur comprenant des moyens formant code de programme pour exécuter les étapes selon l'une quelconque des revendications 1 à 7 lorsque ce programme est exécuté sur un ordinateur.

9. Moyens pouvant être lus par un ordinateur comprenant un programme enregistré, lesdits moyens pouvant être lus par un ordinateur comprenant des moyens formant code de programme pour exécuter les étapes selon les revendications 5 à 7, lorsque ledit programme est exécuté sur un ordinateur.
